# EUROPEAN PATENT APPLICATION

(11) **EP 1 321 990 A2**
(43) Date of publication of application: **25.06.2003**
(21) Application number: 02025283.9
(22) Date of filing: 12.11.2002
(51) Int. Cl.: H01M 2/10, H01M 2/20, H01M 10/50, G05D 23/00, B60L 11/18

(54) **Assembled battery, assembled battery module and vehicle equipped with the assembled battery or the assembled battery module**

(30) Priority: 19.12.2001 JP 2001386714
(71) Applicant: NISSAN MOTOR COMPANY, LIMITED, Yokohama-shi, Kanagawa-ken (JP)
(72) Inventor: Ito, Takanori, Kamakura-shi, Kanagawa-ken (JP); Horie, Hideaki, Yokosuka-shi, Kanagawa-ken (JP)
(74) Representative: Weber, Joachim, Dr.

(57) **Abstract**

An assembled battery (1) includes a plurality of batteries (2) connected in parallel or in series, terminals (3) taking out an output of the plurality of batteries (2), bus bars (12) connecting the batteries (2) one another, and rugged portions (4) provided on the bus bars. Further, the rugged portions (4) have at least one shape selected from the group consisting of: a triangular prism; a cuboid; a semisphere; and a hole.

## Description

### BACKGROUND OF THE INVENTION

### 1. Field of the Invention

The present invention relates to an assembled battery formed by connecting a plurality of batteries one another in parallel or in series, an assembled battery module using the batteries and a vehicle using the assembled battery or using the assembled battery module as a power source.

### 2. Description of the Related Art

Heretofore, as this type of an assembled battery, for example, there has been an assembled battery formed by connecting a plurality of the same batteries one another in series as disclosed in Japanese Patent Application Laid-Open No. H10-64598. The assembled battery is equipped with a cooling fan cooling the batteries. Such an assembled battery discloses that the cooling fan is activated when temperature of the assembled battery increases and that the cooling fan is stopped when the temperature decreases. In this assembled battery, the batteries are set in an appropriate temperature range, whereby achieving efficient utilization of the batteries.

### SUMMARY OF THE INVENTION

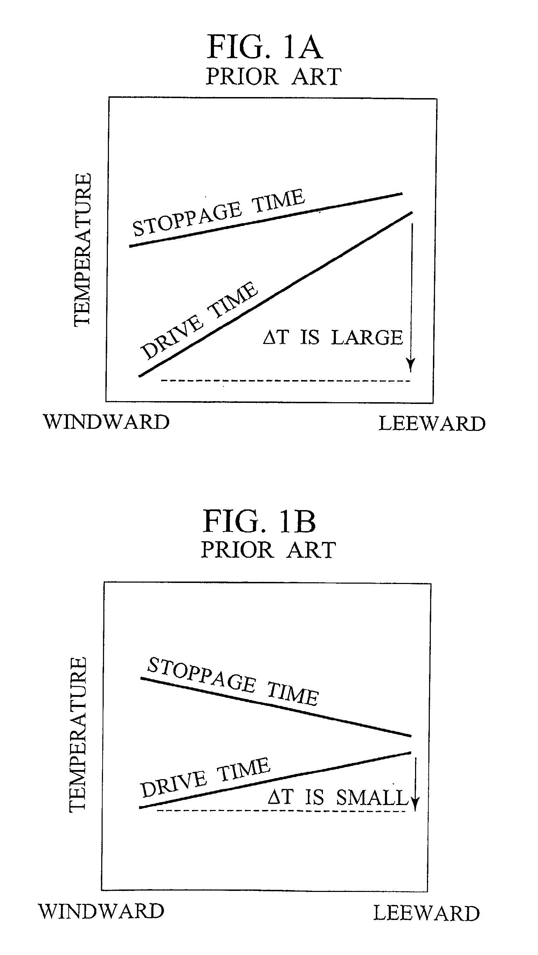

However, in the above-described assembled battery, there has been a problem to be described below. Although batteries arranged on a position cooled sufficiently by the cooling fan can exert battery characteristics thereof sufficiently, there are batteries cooled insufficiently depending on arrangement thereof. Therefore, the insides of the batteries are degraded rapidly. Such degraded batteries cannot exert performance thereof sufficiently, causing a case where required power cannot be outputted as an assembled battery. Particularly, batteries arranged on a region far from the cooling fan are not cooled sufficiently since air warmed by windward batteries is blown thereto. FIG. 1A is a graph showing temperature distributions in both windward and leeward of the assembled battery in the case of providing terminals on the leeward battery. FIG. 1B is a graph showing temperature distributions in windward and leeward of the assembled battery in the case of providing terminals on the windward battery. Generated heat from the leeward battery in the case of providing the terminals on the leeward battery is higher than that of the leeward battery in the case of providing the terminals on the windward battery. Further, when no air is blown from the windward toward the leeward (during stoppage of a vehicle), temperature difference between the windward and the leeward is increased, thereby degrading the insides of the batteries rapidly.

In consideration of the above problems, it is an object of the present invention to provide an assembled battery capable of preventing an output decrease of the entire assembled battery, which is caused by temperature differences among respective batteries constituting the assembled battery.

The inventors of the present invention assiduously examined means for achieving the foregoing object. Consequently, the inventors found out that an assembled battery including a plurality of batteries connected in parallel or in series, in which rugged portions having at least one shape of triangular prism, cuboid, semisphere and hole are provided on connection portions between the batteries, could attain the foregoing object.

An aspect of the present invention provides an assembled battery comprising: a plurality of batteries connected in any of parallel and series; terminals for taking out an output of the plurality of batteries; bus bars for connecting the batteries one another; and rugged portions provided on the bus bars, the rugged portions having at least one shape selected from the group consisting of: a triangular prism; a cuboid; a semisphere; and a hole shape.

### BRIEF DESCRIPTION OF THE DRAWINGS

The present invention will now be described with reference to the accompanying drawings wherein:
FIG. 1A is a graph showing temperature distributions in both windward and leeward of an assembled battery in a case of providing terminals on the leeward battery;
FIG. 1B is a graph showing temperature distributions in both windward and leeward of an assembled battery in a case of providing terminals on the windward battery;
FIG. 2 is a cross-sectional view showing an internal structure of an assembled battery in a case of using lithium ion secondary batteries for laminated batteries in examples of the present invention;
FIG. 3 is a plan view showing the internal structure of the assembled battery in the case of using the lithium ion secondary batteries for the laminated batteries in the examples of the present invention;
FIG. 4A is a plan view showing one embodiment of the laminated battery in the examples of the present invention;
FIG. 4B is a side elevational view of FIG. 4A;
FIG. 5A is a plan view showing another embodiment of the laminated battery in the examples of the present invention;
FIG. 5B is a side elevational view of FIG. 5A;
FIG. 6 is a schematic view showing a shape of rugged portions of Example 1;
FIG. 7 is a schematic view showing a shape of rugged portions of Example 2;
FIG. 8 is a schematic view showing a shape of rugged portions of Example 3;
FIG. 9 is a schematic view showing a shape of rugged portions of Example 4;
FIG. 10 is a schematic view showing a shape of rugged portions of Example 5;
FIG. 11 is a schematic view showing a shape of rugged portions of Example 6;
FIG. 12 is a schematic view showing a shape of rugged portions of Example 7;
FIG. 13 is a schematic view showing a shape of rugged portions of Example 8;
FIG. 14 is a schematic view showing a shape of rugged portions of Example 9;
FIG. 15 is a schematic view showing a shape of rugged portions of Example 10;
FIG. 16 is a schematic view showing a shape of rugged portions of Example 11;
FIG. 17 is a schematic view showing a shape of rugged portions of Example 12;
FIG. 18 is a schematic view showing a shape of rugged portions of Example 13;
FIG. 19A is a view showing an assembled battery module in which a plurality of the assembled batteries of the examples are connected in series;
FIG. 19B is a view showing an assembled battery module in which a plurality of the assembled batteries of the examples are connected in parallel; and
FIG. 20 is a view showing a vehicle in which an assembled battery structure including the assembled batteries or assembled battery modules of the examples is mounted.

### DETAILED DESCRIPTION OF THE PREFERRED EMBODIMENTS

### (Examples)

Hereinafter, embodiments of an assembled battery in the present invention will be described based on the following examples. However, the present invention is not limited to these examples.

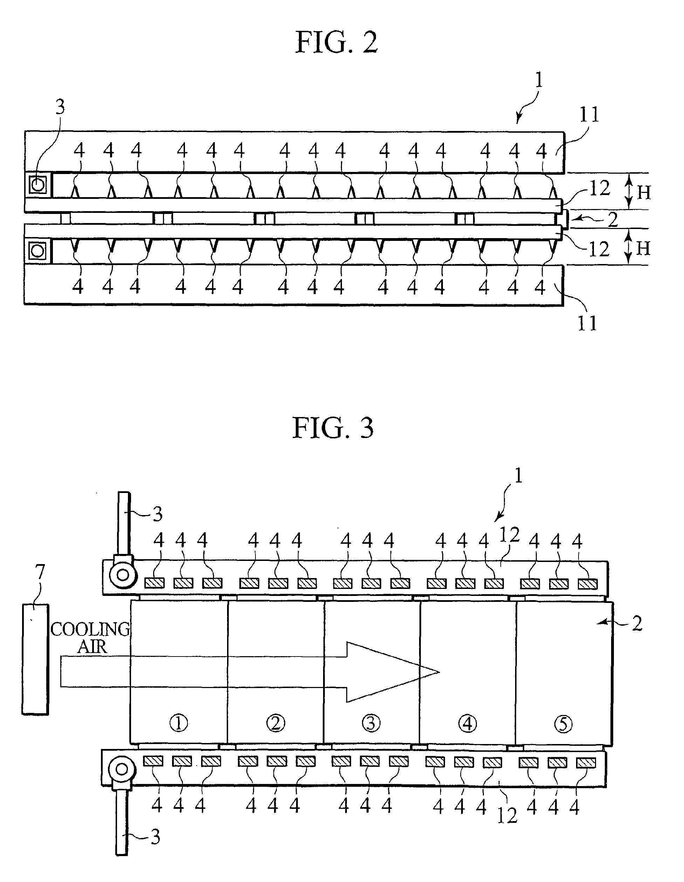

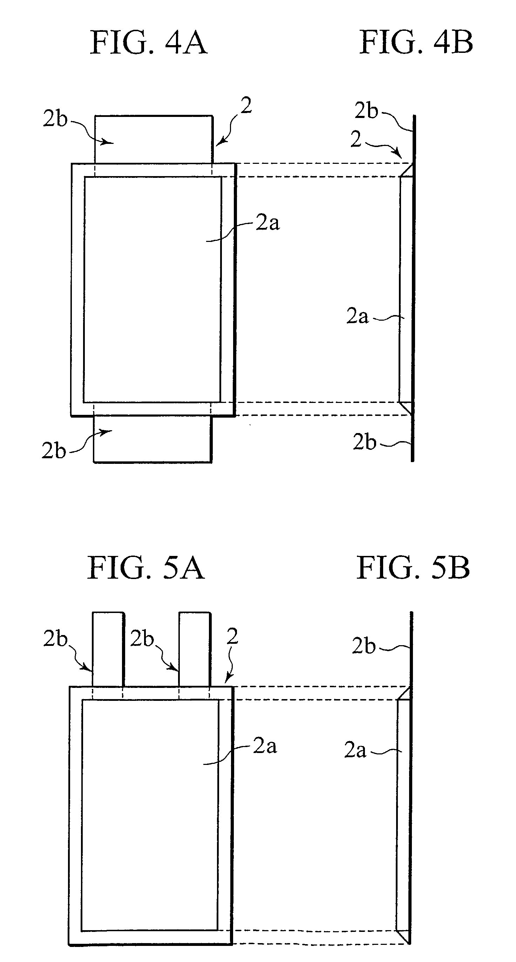

FIGS. 2 and 3 are cross-sectional and plan views showing an internal structure of an assembled battery 1 of the present invention, respectively. The assembled battery 1 includes laminated batteries 2, terminals 3, rugged portions 4, air blowing means 7, heat insulators 11 and bus bars 12. The terminals 3 take out an output of the laminated batteries 2. The rugged portions 4 are provided on surfaces or in internal portions of the bus bars 12. The air blowing means 7 blows cooling air to the laminated batteries 2, thereby cooling surfaces of the laminated batteries 2. The heat insulators 11 absorb the heat radiated from the laminated batteries 2 and prevent the heat from being discharged to the outside of the assembled battery 1. The bus bars 12 connect respective electrodes 2b, 2b of each of the laminated batteries 2 one another (refer to FIGS. 4A and 4B).

As shown in FIG. 2, upper and lower surfaces of each of the electrodes 2b are joined to upper and lower bus bars 12, 12, respectively. Joint portions between the electrodes 2b and the bus bars 12 do not need to be provided on both of the upper and lower sides, but may be provided only on any of the upper and lower sides. For the joining, it is preferable to use screw fastening, riveting, welding, soldering and particularly, ultrasonic welding. However, the joining method is not particularly limited to these.

Each of the batteries 2 for use in the present invention is constituted by a battery body 2a and the electrodes 2b. As shown in FIG. 4, the electrodes 2b are formed on one side and an opposite side of the battery body 2a. However, the battery 2 is not limited to this battery shape. For example, as shown in FIG. 5, the electrodes 2b may be provided on one side of the battery body 2a.

The battery 2 of the present invention employs a lithium ion secondary battery. In general, the lithium ion secondary battery includes positive and negative electrodes, active materials for the positive and negative electrodes, separators, an electrolyte and the like as main constituent components.

For example, as a material of the positive electrodes, a base material containing aluminum as a main component is suitably used. As a material of the negative electrodes, a base material containing copper or nickel as a main component is suitably used.

The active material for the positive electrodes is formed on a surface of the base material for the positive electrodes. As the active material for the positive electrodes, an active material obtained by mixing carbon powder such as acetylene black and graphite powder with lithium transition metal compound such as lithium manganate (LiMn₂O₄), lithium cobaltate (LiCoO₂) and lithium nickelate (LiNiO₂) is suitably used. The mixed active material can improve electrical conductivity of the positive electrodes.

The active material for the negative electrodes is formed on a surface of the base material for the negative electrodes. The active material for the negative electrodes is composed of 1) amorphous carbon material such as soft carbon and hard carbon or 2) active material powder such as carbon powder of natural graphite and the like. Particularly, highly graphitized carbon material such as graphite and artificial graphite has features as follows: diffusion of lithium ions in crystals of the material is easy, a specific gravity of the material is large, and a ratio of lithium ions storable per unit weight of the material is large, the lithium ions contributing to charge/discharge of the battery. It is preferable to use the highly graphitized carbon material as the active material for the negative electrodes.

As each of the separators, a film made into a three-layer structure (PP-PE-PP) is preferable, which is obtained by sandwiching a lithium-ion permeable polyethylene (PE) film having micro pores between porous lithium-ion permeable polypropylene (PP) films. In the case of using such separators, an electrolyte solution as a lithium-ion conductor is required. As such an electrolyte solution, a solution obtained by dissolving an electrolyte of LiPF₆ into mixed solution in which ethylene carbonate (EC) is mixed with diethyl carbonate (DEC) is suitably used.

Meanwhile, it is also possible to use a foil-shaped or plate-shaped solid electrolyte instead of the electrolyte solution. As this solid electrolyte, a pseudo-solid electrolyte obtained by polymerizing or pectizing the above-described electrolyte, an organic solid electrolyte having lithium-ion conductivity, or an inorganic solid electrolyte such as lithium sulfide glass is cited.

As shown in FIGS. 2 and 3, in the assembled battery described above, the batteries 2 are sandwiched by the heat insulators 11 in the vertical direction such that each of intervals H between the heat insulators 11 and the batteries 2 is about 10 mm. Cooling air is blown to this interval H. However, the assembled battery is not limited to these conditions.

As shown in FIG. 2, the plurality of rugged portions 4 are provided on the surfaces of the bus bars 12 opposing to the heat insulators 11. The cooling air is efficiently blown to the bus bars 12 by these rugged portions 4. Further, surface area of the bus bars 12 is increased, thereby making it possible to enhance heat radiation efficiency of the bus bars 12. Hereinafter, description will be made in detail for the shapes of the rugged portions 4 based on the respective examples. Note that "wind direction" described below is defined as a direction of air flow blown from the air blowing means 7 to the batteries 2.

### (Example 1)

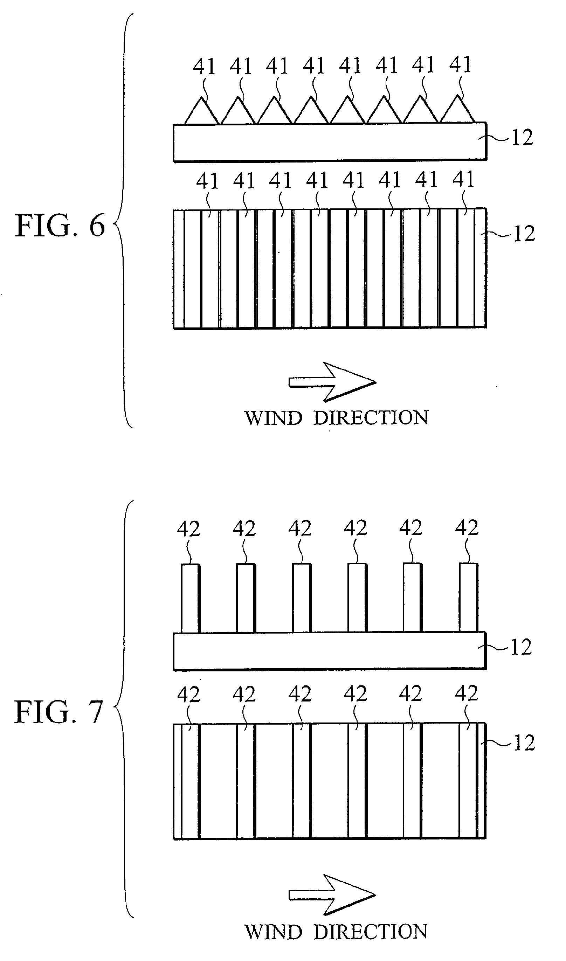

As shown in FIGS. 2 and 3, five batteries 2 are connected in parallel. As shown in FIG. 6, triangular prisms 41 are arranged on each of bus bars 12 as the connection portion between the batteries 2.

### (Example 2)

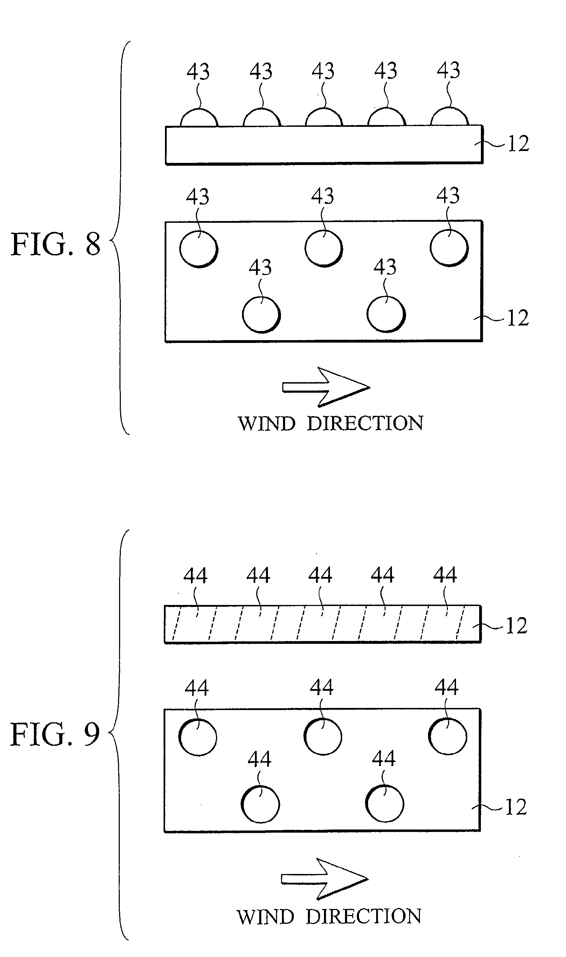

As shown in FIGS. 2 and 3, five batteries 2 are connected in parallel. As shown in FIG. 7, cuboids 42 are arranged on each of bus bars 12 as the connection portion between the batteries 2.

### (Example 3)

As shown in FIGS. 2 and 3, five batteries 2 are connected in parallel. As shown in FIG. 8, semispherical convex portions 43 are arranged on each of bus bars 12 as the connection portion between the batteries 2.

### (Example 4)

As shown in FIGS. 2 and 3, five batteries 2 are connected in parallel. As shown in FIG. 9, hole-shaped concave portions 44 are arranged in each of bus bars 12 as the connection portion between the batteries 2.

### (Example 5)

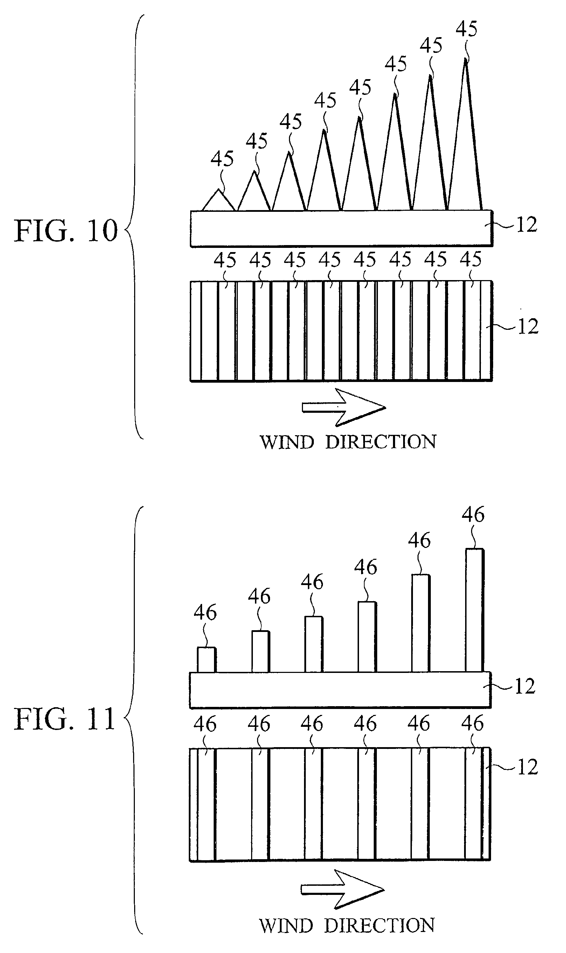

As shown in FIGS. 2 and 3, five batteries 2 are connected in parallel. As shown in FIG. 10, triangular prisms 45 are arranged on each of bus bars 12 as the connection portion between the batteries 2. A setting is made such that heights of the triangular prisms 45 increase from the windward toward the leeward.

### (Example 6)

As shown in FIGS. 2 and 3, five batteries 2 are connected in parallel. As shown in FIG. 11, cuboids 46 are arranged on each of bus bars 12 as the connection portion between the batteries 2. A setting is made such that heights of the cuboids 46 increase from the windward toward the leeward.

### (Example 7)

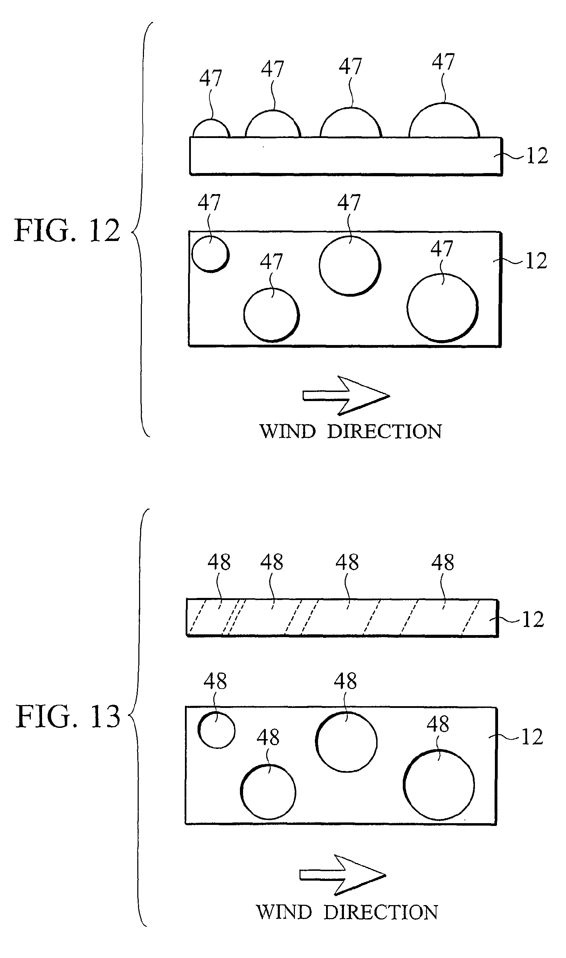

As shown in FIGS. 2 and 3, five batteries 2 are connected in parallel. As shown in FIG. 12, semispherical convex portions 47 are arranged on each of bus bars 12 as the connection portion between the batteries 2. A setting is made such that sizes of the semispherical convex portions 47 increase from the windward toward the leeward.

### (Example 8)

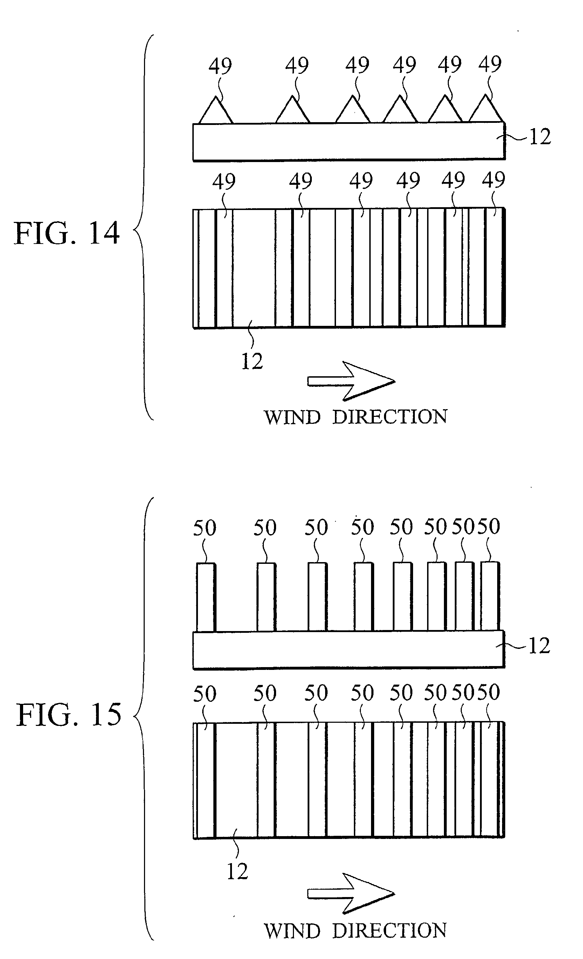

As shown in FIGS. 2 and 3, five batteries 2 are connected in parallel. As shown in FIG. 13, hole-shaped concave portions 48 are arranged in each of bus bars 12 as the connection portion between the batteries. A setting is made such that sizes of the hole-shaped concave portions 48 increase from the windward toward the leeward.

### (Example 9)

As shown in FIGS. 2 and 3, five batteries 2 are connected in parallel. As shown in FIG. 14, triangular prisms 49 are arranged on each of bus bars 12 as the connection portion between the batteries 2. A setting is made such that densities of the triangular prisms 49 increase from the windward toward the leeward.

### (Example 10)

As shown in FIGS. 2 and 3, five batteries 2 are connected in parallel. As shown in FIG. 15, cuboids 50 are arranged on each of bus bars 12 as the connection portion between the batteries 2. A setting is made such that densities of the cuboids 50 increase from the windward toward the leeward.

### (Example 11)

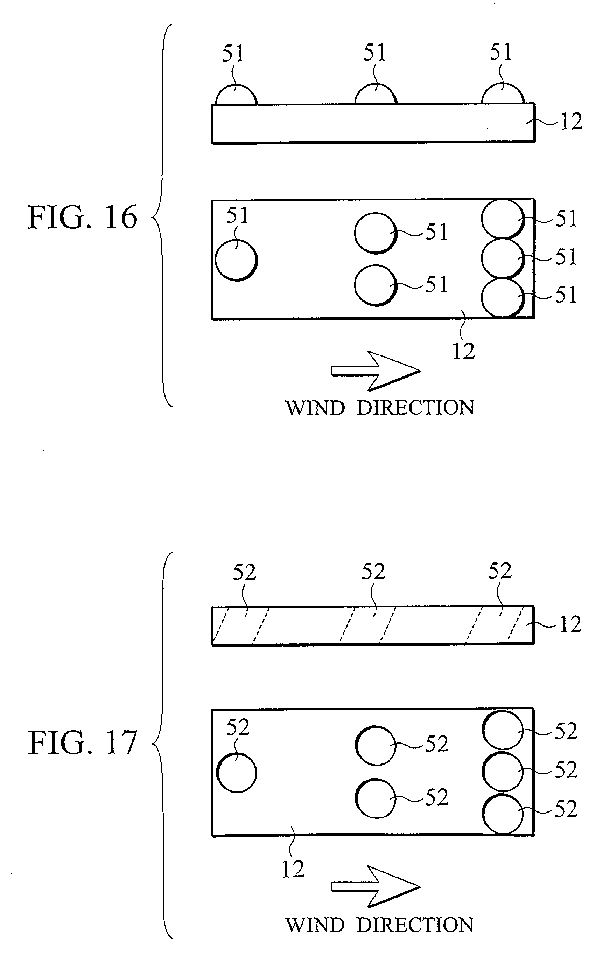

As shown in FIGS. 2 and 3, five batteries 2 are connected in parallel. As shown in FIG. 16, semispherical convex portions 51 are arranged on each of bus bars 12 as the connection portion between the batteries 2. A setting is made such that densities of the semispherical convex portions 51 increase from the windward toward the leeward.

### (Example 12)

As shown in FIGS. 2 and 3, five batteries 2 are connected in parallel. As shown in FIG. 17, hole-shaped concave portions 52 are arranged in each of bus bars 12 as the connection portion between the batteries 2. A setting is made such that densities of the hole-shaped concave portions 52 increase from the windward toward the leeward.

### (Example 13)

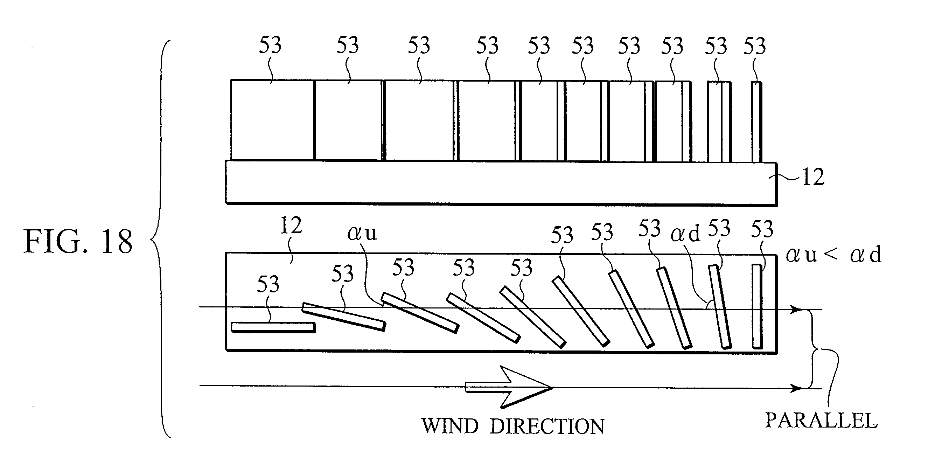

As shown in FIGS. 2 and 3, five batteries 2 are connected in parallel. As shown in FIG. 18, cuboids 53 are arranged on each of bus bars 12 as the connection portion between the batteries 2. A setting is made such that the angles (e.g., αu, αd) of the major axes of the cuboids 53 to the wind direction increase from the windward toward the leeward.

### (Comparative example 1)

As shown in FIGS. 2 and 3, five batteries 2 are connected in parallel, thus constituting the assembled battery 1. The surface of the connection portion between the batteries 2 is flat. Specifically, no rugged portions 4 are provided on the bus bar 12. It is assumed that air is not blown to this assembled battery 1 in the following evaluation of characteristics.

### (Comparative example 2)

As shown in FIGS. 2 and 3, five batteries 2 are connected in parallel, thus constituting the assembled battery 1. The surface of the connection portion between the batteries 2 is flat. Specifically, no rugged portions 4 are provided on the bus bar 12. It is assumed that air is blown to this assembled battery 1 in the following evaluation of characteristics.

### (Evaluation of Characteristics)

For each of the assembled batteries of the above examples and comparative examples, an electric current equivalent to a current flowing through each assembled battery at 25°C is discharged for five seconds, and the discharge is paused for fifty-five seconds thereafter. A test with the above-described one-minute operation as one cycle was carried out five cycles continuously. Then, a temperature increase was measured for a terminal of which temperature was increased most among the terminals of each battery. Moreover, cooling air having volume flow rate 0.1 m³/min was flown in the arrow direction of FIG. 3 during the cycles. Table 1 shows results thereof. ΔT (°C) is defined as ΔT = (temperature of a leeward battery) - (temperature of a windward battery).

**Table 1**

| Classification | Temperature of A Windward Battery (°C) | Temperature of A Leeward Battery (°C) | Δ T (°C) |
|---|---|---|---|
| Comparative example 1 | 62 | 71 | 9 |
| Comparative example 2 | 50 | 58 | 8 |
| Example 1 | 38 | 42 | 4 |
| Example 2 | 37 | 40 | 3 |
| Example 3 | 40 | 45 | 5 |
| Example 4 | 45 | 50 | 5 |
| Example 5 | 33 | 36 | 3 |
| Example 6 | 30 | 34 | 4 |
| Example 7 | 40 | 42 | 2 |
| Example 8 | 44 | 48 | 4 |
| Example 9 | 40 | 43 | 3 |
| Example 10 | 38 | 42 | 4 |
| Example 11 | 40 | 45 | 5 |
| Example 12 | 46 | 49 | 3 |
| Example 13 | 35 | 37 | 2 |

As apparent from Table 1, the heat radiation characteristics of the batteries of the examples are improved as compared with those of the batteries having flat connection portions since the surface areas of the terminal portions are expanded. In comparison with the comparative examples, the temperatures of the leeward batteries of the examples are decreased to 45°C on average, and thus the effectiveness of the present invention was made apparent. Moreover, it was also confirmed in the examples that the temperature increase of the leeward was restricted with respect to the windward and that temperature differences among the respective batteries were reduced, and thus the effectiveness of the present invention was made far more apparent.

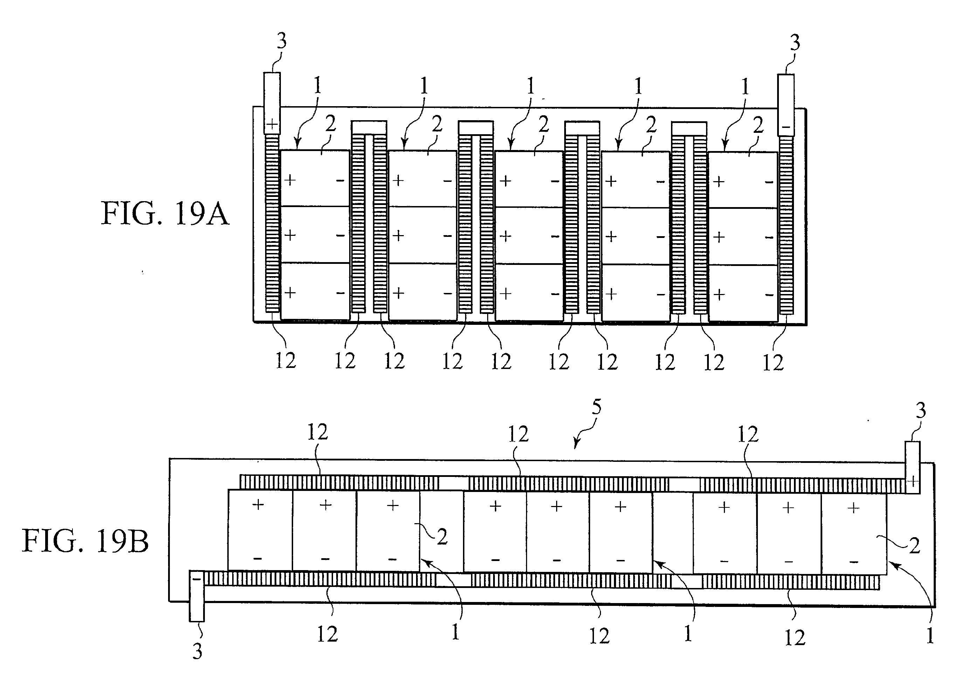

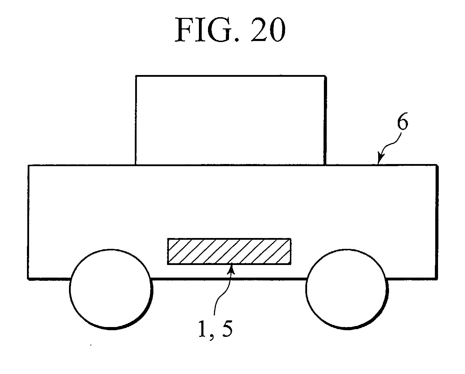

FIGS. 19A and 19B show an assembled battery module 5 using the above-described assembled batteries 1. The assembled battery module 5 shown in FIG. 19A is configured such that five assembled batteries 1 shown in FIGS. 2 and 3 are connected in series, and obtains a high output. The assembled battery module 5 shown in FIG. 19B is configured such that assembled batteries 1 shown in FIGS. 2 and 3 are connected in parallel, and obtains a high output. Furthermore, FIG. 20 shows a vehicle 6 in which the assembled batteries 1 or the assembled battery module 5 is mounted. The assembled battery module 5 or the vehicle 6 attains a high output and a long lifetime due to the above-described effects of the present invention.

According to the present invention, an assembled battery is provided, which is characterized in that the rugged portions having at least one shape of triangular prism, cuboid, semisphere and hole shape are provided at connecting portions connecting the batteries one another in parallel or in series. The rugged portions having such a shape are provided at the connecting portions, thus making it possible to increase surface area of the bus bars and to improve the heat radiation efficiency thereof. Therefore, the output decrease and degradation of the entire assembled battery can be prevented.

Air is efficiently applied to the bus bars in the case of blowing the air from the air blowing means to the assembled battery of the present invention, thus making it possible to sufficiently control heat generation at the terminal portions in the case of charge/discharge of a large current from the batteries. Moreover, heights of the foregoing rugged portions may increase toward the leeward direction with respect to the wind direction of the air blowing means, or densities of the rugged portions may increase similarly to the above. Furthermore, in the rugged portions having major and minor axes, angles of the major axis direction to a direction parallel to the wind direction may increase similarly. With such a structure, air is efficiently applied to the leeward batteries. Thus, the temperature differences in the entire assembled battery can be reduced, whereby the output decrease and degradation of the entire assembled battery can be prevented. Furthermore, in the case of providing the output terminals leeward, batteries located more leeward generate more heat. The rugged portions can be more effective means in this case. The air blowing means may be used air blowing means such as a general cooling fan may be used, or air blowing means in which air is taken from outside of the vehicle during vehicle running and the like. No particular limitations are imposed on the air blowing means.

It is possible to obtain electric power having both large capacity and output by adopting a configuration such as the assembled battery module including the assembled batteries of the present invention. Furthermore, temperature differences in the entire assembled battery are reduced, so that the output decrease and degradation of the entire assembled battery can be prevented.

The assembled batteries or the assembled battery module of the present invention is mounted in the vehicle, thereby a high-output vehicle that has high stability in supply of electric power can be provided.

As understood from the above description, it is made possible to control temperature increase of the terminals in accordance with the present invention. Furthermore, the assembled batteries in which temperature differences are small can be obtained by changing size and density of the rugged portions, such that lifetime of the batteries can be improved.

The present disclosure relates to subject matters contained in Japanese Patent Application No. 2001-386714, filed on December 19, 2001, the disclosure of which is expressly incorporated herein by reference in its entirety.

While the preferred embodiments of the present invention have been described using specific terms, such description is for illustrative purposes. It is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention as defined in the following claims.

## Claims

1. An assembled battery (1) comprising:
a plurality of batteries (2) connected in any of parallel and series;
terminals (3) taking out an output of the plurality of batteries (2);
bus bars (12) connecting the batteries (2) one another; and
rugged portions (4) provided on the bus bars (12), the rugged portions (4) having at least one shape selected from the group consisting of: a triangular prism; a cuboid; a semisphere; and a hole shape.

2. The assembled battery (1) according to claim 1,
further comprising air blowing means (7) for blowing a cooling air to each of the plurality of batteries (2), heights of the rugged portions (4) being set larger from a windward of a flow of the cooling air toward a leeward of the flow of the cooling air.

3. The assembled battery (1) according to claim 1,
further comprising air blowing means (7) for blowing a cooling air to each of the plurality of batteries (2), densities of the rugged portions (4) being higher from a windward of a flow of the cooling air toward a leeward of the flow of the cooling air.

4. The assembled battery (1) according to claim 1,
further comprising air blowing means (7) for blowing a cooling air to each of the plurality of batteries (2), each of the rugged portions (4) having a major axis and a minor axis, and angles (αu, αd) of the major axis to a flow line of the cooling air being set larger from a windward of a flow of the cooling air toward a leeward of the flow of the cooling air.

5. An assembled battery module (5) comprising a plurality of assembled batteries (1),
each of the assembled batteries (1) comprising:
a plurality of batteries (2) connected in any of parallel and series;
terminals (3) taking out an output of the plurality of batteries (2);
bus bars (12) connecting the batteries (2) one another; and
rugged portions (4) provided on the bus bars (12), the rugged portions (4) having at least one shape selected from the group consisting of: a triangular prism; a cuboid; a semisphere; and a hole shape,
wherein the plurality of assembled batteries (1) are connected in any of parallel and series.

6. The assembled battery module (5) according to claim 5,
wherein each of the assembled batteries (1) further comprising air blowing means (7) for blowing a cooling air to each of the plurality of batteries (2), heights of the rugged portions (4) being set larger from a windward of a flow of the cooling air toward a leeward of the flow of the cooling air.

7. The assembled battery module (5) according to claim 5,
wherein each of the assembled batteries (1) further comprising air blowing means (7) for blowing a cooling air to each of the plurality of batteries (2), densities of the rugged portions (4) being higher from a windward of a flow of the cooling air toward a leeward of the flow of the cooling air.

8. The assembled battery module (5) according to claim 5,
wherein each of the assembled batteries (1) further comprising air blowing means (7) for blowing a cooling air to each of the plurality of batteries (2), each of the rugged portions (4) having a major axis and a minor axis, and angles (αu, αd) of the major axis to a flow line of the cooling air being set larger from a windward of a flow of the cooling air toward a leeward of the flow of the cooling air.

9. A vehicle (6) comprising an assembled battery (1),
the assembled battery (1) comprising:
a plurality of batteries (2) connected in any of parallel and series;
terminals (3) taking out an output of the plurality of batteries (2);
bus bars (12) connecting the batteries (2) one another; and
rugged portions (4) provided on the bus bars (12), the rugged portions (4) having at least one shape selected from the group consisting of: a triangular prism; a cuboid; a semisphere; and a hole shape.

10. The vehicle (6) according to claim 9,
wherein the assembled battery (1) further comprising air blowing means (7) for blowing a cooling air to each of the plurality of batteries (2), heights of the rugged portions (4) being set larger from a windward of a flow of the cooling air toward a leeward of the flow of the cooling air.

11. The vehicle (6) according to claim 9,
wherein the assembled battery (1) further comprising air blowing means (7) for blowing a cooling air to each of the plurality of batteries (2), densities of the rugged portions (4) being higher from a windward of a flow of the cooling air toward a leeward of the flow of the cooling air.

12. The vehicle (6) according to claim 9,
wherein the assembled battery (1) further comprising air blowing means (7) for blowing a cooling air to each of the plurality of batteries (2), each of the rugged portions (4) having a major axis and a minor axis, and angles (αu, αd) of the major axis to a flow line of the cooling air being set larger from a windward of a flow of the cooling air toward a leeward of the flow of the cooling air.

13. A vehicle (6) comprising an assembled battery module (5),
the assembled battery module (5) comprising a plurality of assembled batteries (1),
each of the assembled batteries (1) comprising:
a plurality of batteries (2) connected in any of parallel and series;
terminals (3) taking out an output of the plurality of batteries (2);
bus bars (12) connecting the batteries (2) one another; and
rugged portions (4) provided on the bus bars (12), the rugged portions (4) having at least one shape selected from the group consisting of: a triangular prism; a cuboid; a semisphere; and a hole shape,
wherein the plurality of assembled battery (1) are connected in any of parallel and series.

14. The vehicle (6) according to claim 13,
wherein each of the assembled batteries (1) further comprising air blowing means (7) for blowing a cooling air to each of the plurality of batteries (2), heights of the rugged portions (4) being set larger from a windward of a flow of the cooling air toward a leeward of the flow of the cooling air.

15. The vehicle (6) according to claim 13,
wherein each of the assembled batteries (1) further comprising air blowing means (7) for blowing a cooling air to each of the plurality of batteries (2), densities of the rugged portions (4) being higher from a windward of a flow of the cooling air toward a leeward of the flow of the cooling air.

16. The vehicle (6) according to claim 13,
wherein each of the assembled batteries (1) further comprising air blowing means (7) for blowing a cooling air to each of the plurality of batteries (2), each of the rugged portions (4) having a major axis and a minor axis, and angles (αu, αd) of the major axis to a flow line of the cooling air being set larger from a windward of a flow of the cooling air toward a leeward of the flow of the cooling air.
